# EUROPEAN PATENT SPECIFICATION

(11) **EP 4 190 057 B1**
(45) Date of publication and mention of the grant of the patent: **30.09.2026**
(21) Application number: 21755074.8
(22) Date of filing: 03.08.2021
(51) Int. Cl.: H04W 68/00, H04W 76/12

(54) **PAGING MANAGEMENT**
FUNKRUFVERWALTUNG
GESTION DE RADIOMESSAGERIE

(30) Priority: 03.08.2020 US 202063060546 P
(43) Date of publication of application: 07.06.2023
(73) Proprietor: Lenovo (Singapore) Pte. Ltd., Singapore 556741 (SG)
(72) Inventor: KUCHIBHOTLA, Ravi, Chicago, Illinois 60680 (US); VELEV, Genadi, 64291 Darmstadt (DE); BASU MALLICK, Prateek, 63303 Dreieich (DE); LOEHR, Joachim, 65203 Wiesbaden (DE); CHOI, Hyung-Nam, 85521 Ottobrunn (DE)
(74) Representative: Openshaw & Co.
(86) International application number: PCT/IB2021/057123
(87) International publication number: WO 2022/029637

(56) References cited:
- WO-A1-2020/076460
- US-A1- 2018 249 479

## Description

### CROSS-REFERENCE TO RELATED APPLICATIONS

This application claims priority to United States Provisional Patent Application Number 63/060,546 entitled "PAGING MECHANISMS TO SUPPORT MULTI-FREQUENCY, MULTI-SLICE DEPLOYMENTS" and filed on Aug. 3, 2020, for Ravi Kuchibhotla.

### FIELD

The subject matter disclosed herein relates generally to wireless communications and more particularly relates to paging management. There is disclosed herein a user equipment device, a network apparatus, and a method performed by a user equipment.

### BACKGROUND

In certain wireless communication systems, a User Equipment device ("UE") is able to connect with a fifth-generation ("5G") core network (i.e., "5GC") in a Public Land Mobile Network ("PLMN"). In wireless networks, UE devices connected to the wireless communication systems may receive paging messages to from the wireless communication system to indicate new data for the UE devices.

US 2018/249,479 A1 relates to transmitting and receiving data in a wireless communication system supporting a low latency service. D1 describes a method that includes performing a random access procedure with the base station based on the system information.

WO 2020/76460 A1 describes providing a wait indication for a delayed paging operation, and describes a UE, responsive to receiving a paging message, transmitting a wait indication to a network node indicating a delay in transmission of a response to the paging message.

### BRIEF SUMMARY

The invention is defined by the appended claims. Claim 1 defines a user equipment, claim 8 defines a network apparatus, and claim 13 defines a method performed or performable by a user equipment. In the following, any method and/or apparatus referred to as embodiments but nevertheless do not fall within the scope of the appended claims are to be understood as examples helpful in understanding the invention.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for paging management;
Figure 2 is a signal flow diagram illustrating one embodiment of a procedure for network triggered service request;
Figure 3 is a block diagram illustrating one embodiment of a user equipment apparatus that may be used for paging management;
Figure 4 is a block diagram illustrating one embodiment of a network apparatus that may be used for paging management;
Figure 5 is a flowchart diagram illustrating one embodiment of a method for paging management; and
Figure 6 is a flowchart diagram illustrating one embodiment of another method for paging management

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C. As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for paging management. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

A user terminal may be subscribed to multiple services such as voice, video, XR, etc. An operator may deploy these services over different spectrum bands in the service area. Operators now have frequency bands spanning a wide range from 600 MHz to 60 GHz+ for 5G services. Depending on the service attributes, spectrum allocation, network types, or the like, various services may be further mapped to different frequency bands and thereby slices. Thus, even though a user terminal may have a subscription to all the services supported and available in the operator's service area, at a given location the user terminal may not be able to receive or initiate services due to the operator having limited a service type to a spectrum band or slice.

In particular, TS 22.261 clause 6.1 states that network slices can be further customized for operators to provide the optimal functionality of a complete network. Hence, an operator is always allowed to define specific capabilities and deployment configuration in network slices, this includes dedicated specific radio frequency to specific network slices.

When a packet arrives for the user terminal at the core network the core network would conventionally page the UE if in idle state and after the UE connects to the network, the core network delivers the packet over the radio connection. However, if the packet is for a service that is mapped to a frequency for which the user terminal does not currently have coverage, then the packet cannot be delivered if the operator chooses to have the service operate only on a certain frequency and not all frequencies. Based on operator policies the packet may be buffered at the core network for delivery attempts at a later time or dropped. It is therefore advantageous to have a mechanism for the UE to inform the core network when it is in the proximity of the frequency band to which the slice has been mapped to or more generally when it is able to meet the criteria of the slice the packet belongs to.

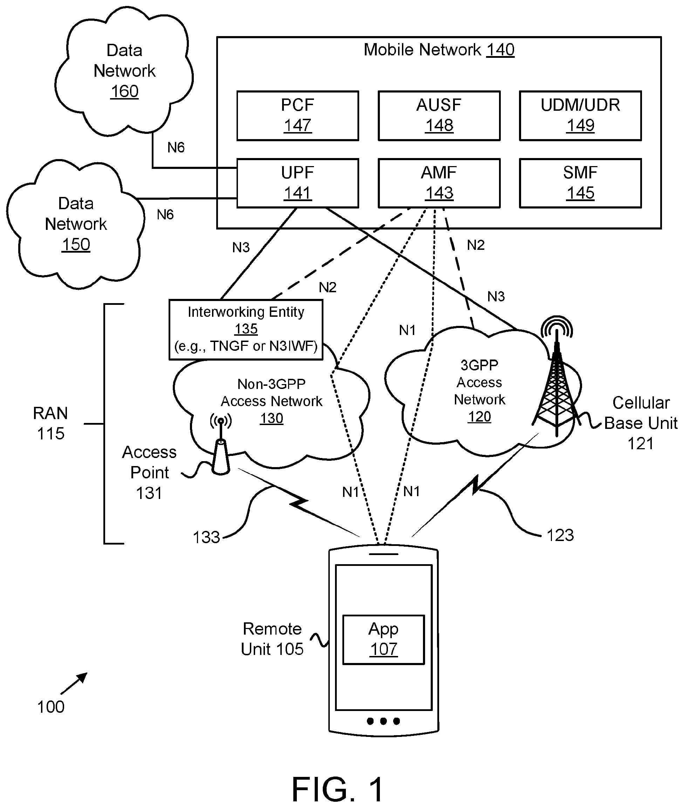

Figure 1 depicts a wireless communication system 100 for paging management, according to embodiments of the disclosure. In one embodiment, the wireless communication system 100 includes at least one remote unit 105, a Fifth-Generation Radio Access Network ("5G-RAN") 115, and a mobile core network 140. The 5G-RAN 115 and the mobile core network 140 form a mobile communication network. The 5G-RAN 115 may be composed of a 3GPP access network 120 containing at least one cellular base unit 121 and/or a non-3GPP access network 130 containing at least one access point 131. The remote unit 105 communicates with the 3GPP access network 120 using 3GPP communication links 123 and/or communicates with the non-3GPP access network 130 using non-3GPP communication links 133. Even though a specific number of remote units 105, 3GPP access networks 120, cellular base units 121, 3GPP communication links 123, non-3GPP access networks 130, access points 131, non-3GPP communication links 133, and mobile core networks 140 are depicted in Figure 1, one of skill in the art will recognize that any number of remote units 105, 3GPP access networks 120, cellular base units 121, 3GPP communication links 123, non-3GPP access networks 130, access points 131, non-3GPP communication links 133, and mobile core networks 140 may be included in the wireless communication system 100.

In one implementation, the RAN 120 is compliant with the 5G system specified in the Third Generation Partnership Project ("3GPP") specifications. For example, the RAN 120 may be a NG-RAN, implementing NR RAT and/or LTE RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the cellular base units 121 in the 3GPP access network 120 via uplink ("UL") and downlink ("DL") communication signals. Furthermore, the UL and DL communication signals may be carried over the 3GPP communication links 123. Similarly, the remote units 105 may communicate with one or more access points 131 in the non-3GPP access network(s) 130 via UL and DL communication signals carried over the non-3GPP communication links 133. Here, the access networks 120 and 130 are intermediate networks that provide the remote units 105 with access to the mobile core network 140.

In some embodiments, the remote units 105 communicate with a remote host (e.g., in the data network 150 or in the data network 160) via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the 5G-RAN 115 (i.e., via the 3GPP access network 120 and/or non-3GPP network 130). The mobile core network 140 then relays traffic between the remote unit 105 and the remote host using the PDU session. The PDU session represents a logical connection between the remote unit 105 and a User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. Additionally - or alternatively - the remote unit 105 may have at least one PDU session for communicating with the packet data network 160. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 131. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 130. In certain embodiments, there is a one-to-one mapping between an EPS Bearer and a QoS profile, such that all packets belonging to a specific EPS Bearer have the same QoS Class Identifier ("QCI").

As described in greater detail below, the remote unit 105 may use a first data connection (e.g., PDU Session) established with the first mobile core network 130 to establish a second data connection (e.g., part of a second PDU session) with the second mobile core network 140. When establishing a data connection (e.g., PDU session) with the second mobile core network 140, the remote unit 105 uses the first data connection to register with the second mobile core network 140.

The cellular base units 121 may be distributed over a geographic region. In certain embodiments, a cellular base unit 121 may also be referred to as an access terminal, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a Home Node-B, a relay node, a device, or by any other terminology used in the art. The cellular base units 121 are generally part of a radio access network ("RAN"), such as the 3GPP access network 120, that may include one or more controllers communicably coupled to one or more corresponding cellular base units 121. These and other elements of radio access network are not illustrated but are well known generally by those having ordinary skill in the art. The cellular base units 121 connect to the mobile core network 140 via the 3GPP access network 120.

The cellular base units 121 may serve a number of remote units 105 within a serving area, for example, a cell or a cell sector, via a 3GPP wireless communication link 123. The cellular base units 121 may communicate directly with one or more of the remote units 105 via communication signals. Generally, the cellular base units 121 transmit DL communication signals to serve the remote units 105 in the time, frequency, and/or spatial domain. Furthermore, the DL communication signals may be carried over the 3GPP communication links 123. The 3GPP communication links 123 may be any suitable carrier in licensed or unlicensed radio spectrum. The 3GPP communication links 123 facilitate communication between one or more of the remote units 105 and/or one or more of the cellular base units 121. Note that during NR operation on unlicensed spectrum (referred to as "NR-U"), the base unit 121 and the remote unit 105 communicate over unlicensed (i.e., shared) radio spectrum.

The non-3GPP access networks 130 may be distributed over a geographic region. Each non-3GPP access network 130 may serve a number of remote units 105 with a serving area. An access point 131 in a non-3GPP access network 130 may communicate directly with one or more remote units 105 by receiving UL communication signals and transmitting DL communication signals to serve the remote units 105 in the time, frequency, and/or spatial domain. Both DL and UL communication signals are carried over the non-3GPP communication links 133. The 3GPP communication links 123 and non-3GPP communication links 133 may employ different frequencies and/or different communication protocols. In various embodiments, an access point 131 may communicate using unlicensed radio spectrum. The mobile core network 140 may provide services to a remote unit 105 via the non-3GPP access networks 130, as described in greater detail herein.

In some embodiments, a non-3GPP access network 130 connects to the mobile core network 140 via an interworking entity 135. The interworking entity 135 provides an interworking between the non-3GPP access network 130 and the mobile core network 140. The interworking entity 135 supports connectivity via the "N2" and "N3" interfaces. As depicted, both the 3GPP access network 120 and the interworking entity 135 communicate with the AMF 143 using a "N2" interface. The 3GPP access network 120 and interworking entity 135 also communicate with the UPF 141 using a "N3" interface. While depicted as outside the mobile core network 140, in other embodiments the interworking entity 135 may be a part of the core network. While depicted as outside the non-3GPP RAN 130, in other embodiments the interworking entity 135 may be a part of the non-3GPP RAN 130.

In certain embodiments, a non-3GPP access network 130 may be controlled by an operator of the mobile core network 140 and may have direct access to the mobile core network 140. Such a non-3GPP AN deployment is referred to as a "trusted non-3GPP access network." A non-3GPP access network 130 is considered as "trusted" when it is operated by the 3GPP operator, or a trusted partner, and supports certain security features, such as strong air-interface encryption. In contrast, a non-3GPP AN deployment that is not controlled by an operator (or trusted partner) of the mobile core network 140, does not have direct access to the mobile core network 140, or does not support the certain security features is referred to as a "non-trusted" non-3GPP access network. An interworking entity 135 deployed in a trusted non-3GPP access network 130 may be referred to herein as a Trusted Network Gateway Function ("TNGF"). An interworking entity 135 deployed in a non-trusted non-3GPP access network 130 may be referred to herein as a non-3GPP interworking function ("N3IWF"). While depicted as a part of the non-3GPP access network 130, in some embodiments the N3IWF may be a part of the mobile core network 140 or may be located in the data network 150.

In one embodiment, the mobile core network 140 is a 5G core ("5GC") or the evolved packet core ("EPC"), which may be coupled to a data network 150, like the Internet and private data networks, among other data networks. A remote unit 105 may have a subscription or other account with the mobile core network 140. Each mobile core network 140 belongs to a single public land mobile network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF ("UPF") 141. The mobile core network 140 also includes multiple control plane functions including, but not limited to, an Access and Mobility Management Function ("AMF") 143 that serves the 5G-RAN 115, a Session Management Function ("SMF") 145, a Policy Control Function ("PCF") 146, an Authentication Server Function ("AUSF") 147, a Unified Data Management ("UDM") and Unified Data Repository function ("UDR").

The UPF(s) 141 is responsible for packet routing and forwarding, packet inspection, QoS handling, and external PDU session for interconnecting Data Network ("DN"), in the 5G architecture. The AMF 143 is responsible for termination ofNAS signaling, NAS ciphering & integrity protection, registration management, connection management, mobility management, access authentication and authorization, security context management. The SMF 145 is responsible for session management (i.e., session establishment, modification, release), remote unit (i.e., UE) IP address allocation & management, DL data notification, and traffic steering configuration for UPF for proper traffic routing.

The PCF 146 is responsible for unified policy framework, providing policy rules to CP functions, access subscription information for policy decisions in UDR. The AUSF 147 acts as an authentication server.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include an Network Exposure Function ("NEF") (which is responsible for making network data and resources easily accessible to customers and network partners, e.g., via one or more APIs), a Network Repository Function ("NRF") (which provides NF service registration and discovery, enabling NFs to identify appropriate services in one another and communicate with each other over Application Programming Interfaces ("APIs")), or other NFs defined for the 5GC. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. A network instance may be identified by a S-NSSAI, while a set of network slices for which the remote unit 105 is authorized to use is identified by NSSAI. In certain embodiments, the various network slices may include separate instances of network functions, such as the SMF and UPF 141. In some embodiments, the different network slices may share some common network functions, such as the AMF 143. The different network slices are not shown in Figure 1 for ease of illustration, but their support is assumed.

Although specific numbers and types of network functions are depicted in Figure 1, one of skill in the art will recognize that any number and type of network functions may be included in the mobile core network 140. Moreover, where the mobile core network 140 comprises an EPC, the depicted network functions may be replaced with appropriate EPC entities, such as an MME, S-GW, P-GW, HSS, and the like.

While Figure 1 depicts components of a 5G RAN and a 5G core network, the described embodiments for using a pseudonym for access authentication over non-3GPP access apply to other types of communication networks and RATs, including IEEE 802.11 variants, GSM, GPRS, UMTS, LTE variants, CDMA 2000, Bluetooth, ZigBee, Sigfoxx, and the like. For example, in an 4G/LTE variant involving an EPC, the AMF 143 may be mapped to an MME, the SMF mapped to a control plane portion of a PGW and/or to an MME, the UPF 141 may be mapped to an SGW and a user plane portion of the PGW, the UDM/UDR 149 may be mapped to an HSS, etc.

As depicted, a remote unit 105 (e.g., a UE) may connect to the mobile core network (e.g., to a 5G mobile communication network) via two types of accesses: (1) via 3GPP access network 120 and (2) via a non-3GPP access network 130. The first type of access (e.g., 3GPP access network 120) uses a 3GPP-defined type of wireless communication (e.g., NG-RAN) and the second type of access (e.g., non-3GPP access network 130) uses a non-3GPP-defined type of wireless communication (e.g., WLAN). The 5G-RAN 115 refers to any type of 5G access network that can provide access to the mobile core network 140, including the 3GPP access network 120 and the non-3GPP access network 130.

As background, a network slice is a logical construct identifying certain network capabilities and characteristics. It consists of resources such as compute, storage and networking supporting a collection of network function instances, and when configured spans from the UE to the core network including radio network. Given the wide range of services that can be supported in a 5G network and the many different deployment and customer scenarios, a large number of slices can be envisioned to be supported in a network. It is also possible that multiple slices are instantiated to supported identical set of services but targeted towards different users.

In the current 3GPP specifications, the various steps at a high level minimally undertaken by a UE in order to get service are as follows:
a. Registration;
b. Establishment of PDU Session(s);
c. Monitoring of Paging for MT services;
d. Service Request initiation (for MO services or for MT services).

3GPP TS 23.501 specifies the various attributes of a slice and the various procedures involved in binding the registration of a UE to the allowed slices.

In particular, after camping on a cell the UE registers with the core network in response to which the core network, TS 23.501 states that: When a UE is successfully registered over an Access Type, the core network informs the (R)AN by providing the allowed network slice selection assistance information ("NSSAI") for the corresponding access type. In the current Rel-16 specifications of 5GS, there is no explicit association of slice with the frequency band. Thus, the core network while associating the UE with having camped on Access Type NR for example, does not further associate it with having camped on frequency band X or Y in the figure below. However, network operators are keen to ensure that association of the frequency carrier/band with a slice.

In one embodiment, an operator may choose to deploy services over different frequency bands/carriers. Consider a deployment consisting of two frequency carrier X and Y. Consider further that a slice identified by S-NSSAI #1 can be accessed only over frequency carrier X, while S-NSSAI #2 can be accessed only over frequency carrier Y.

Consider the case where the UE transmits the Registration On registering successfully with the core network the UE would have provided an allowed NSSAI consisting of NSSAI#1 and NSSAI#2.

In GSMA 5GJA NG.116, for example, one of the requirements is to define the radio spectrum supported by the network slice. A specific frequency band can be used to support a specific network slice(s). For instance, an eMBB slice may be configured to be supported over both 2.6 GHz and 4.9 GHz spectrum bands, while a URLLC slice may be supported only in 4.9 GHz. In some other deployment scenarios, the lower frequency band can be used for IoT in support of extended coverage requirements of IoT applications, while using the higher frequency bands for eMBB services. It is therefore desirable that the system support varying flexible combinations of the spectrum bands and the network slices based on commercial and technical needs and this therefore can be a good tool for operators who require the service isolation/management while maximizing the utilization of their spectrum.

In one embodiment, the generic slice template ("GST"), e.g., documented in GSMA 5GJA NG.116, includes a radio spectrum attribute that defines the radio spectrum supported by the network slice. This is important information, as some terminals might be restricted in terms of frequencies to be used.

**Table 1. Radio Spectrum Table**

| **Parameters** | |
|---|---|
| Value | {String, String, String, ... } |
| Measurement unit | NA |
| Example | n1 |
| | n77 |
| | n38 |
| Tags | Scalability attribute |
| | |
| **Attribute Presence** | |
| Mandatory | |
| Conditional | |
| Optional | X |

This attribute tells which frequencies can be used to access the network slice. In one embodiment, the UE would have to attempt to select 5G-AN with no awareness as to whether a 5G-AN support a S-NSSAI till the S-NSSAI is allowed.

This key issue is how to select a particular cell that can be used to access the network slice(s) when the operator manages a different range of radio spectrums per network slice. In particular, this key issue will address:

In one embodiment, different types of NSSAIs are specified in 3GPP 5GS, including:
Subscribed S-NSSAIs
   i. Stored in the UDM -> 5GC uses this to create the Allowed NSSAI. Some subscribed S-NSSAIs may be marked as default and are used when the UE doesn't send a Requested NSSAI
Configured NSSAI
   i. The PLMN may configure a UE with 1 or more configured NSSAIs. Each Configured NSSAI is valid per PLMN, and there may be a Default Configured NSSAI applicable when there is no Configured NSSAI for a PLMN. UE uses this when creating the Requested NSSAI.
   ii. Could be the same as the Subscribed S-NSSAIs
Allowed NSSAI
   i. The value assigned by the 5GC & valid in a Registration Area or the PLMN over a given access type
Requested NSSAI
   i. Can be either Configured or Allowed NSSAI or a combination thereof
   ii. The UE sends this in NAS signaling as part of registration and may send this in the RRC signaling depending on the configuration per PLMN.
   iii. RAN uses this for AMF selection and provisional handling before getting Allowed NSSAI
   iv. 5GC use this for slice selection, validation etc., and returns the Allowed NSSAI
Rejected NSSAI
   i. Can be rejected in the Registration Area (or) for the entire PLMN
   ii. UE shouldn't attempt this NSSAI again in that RA or in the PLMN

In certain embodiments, NSSAIs are managed at the tracking area level in the 5G-RAN and Registration Area level in the 5GC. During registration, the UE in the registration request message may include a list of requested NSSAIs.

In one embodiment, regarding network triggered service request, if the UE is in CM-IDLE state or CM-CONNECTED state in 3GPP access, the network initiates a Network Triggered Service Request procedure. If the UE is in CM-IDLE state, and asynchronous type communication is not activated, in one embodiment, the network sends a Paging Request to (R)AN/UE. The Paging Request triggers the UE Triggered Service Request procedure in the UE. If asynchronous type communication is activated, in one embodiment, the network stores the received message and forward the message to the (R)AN and/or the UE (e.g., synchronizes the context with the (R)AN and/or the UE) when the UE enters CM-CONNECTED state.

In one embodiment, regarding UE triggered service request, the UE in CM IDLE state initiates the Service Request procedure in order to send uplink signaling messages, user data, to request emergency services fallback, or as a response to a network paging request. The UE, in one embodiment, shall not initiate UE Triggered Service Request from CM-IDLE if there is a Service Gap timer running. In one embodiment, after receiving the Service Request message, the AMF may perform authentication. After the establishment of the signaling connection to an AMF, in one embodiment, the UE or network may send signaling messages, e.g., PDU Session establishment from UE to the SMF, via the AMF.

The Service Request procedure, in one embodiment, is used by a UE in CM-CONNECTED to request activation of a User Plane connection for PDU Sessions and to respond to a NAS Notification message from the AMF. When a User Plane connection for a PDU Session is activated, in one embodiment, the AS layer in the UE indicates it to the NAS layer.

For any Service Request, in one embodiment, the AMF responds with a Service Accept message to synchronize PDU Session status between UE and network, if necessary. The AMF responds with a Service Reject message to UE, if the Service Request cannot be accepted by network. The Service Reject message may include an indication or cause code requesting the UE to perform Registration procedure.

In case of 5G RAN, in one embodiment, in order to register at a core network, the UE sends a Registration Request message and includes the Requested NSSAI and the establishment cause, thereby indicating to the RAN the reason for the RRC connection request. If the UE includes the Requested NSSAI in the registration request, in one embodiment, the AN (access network) may choose an AMF based on this.

The AMF, in one embodiment, upon determining the Allowed NSSAI and upon successful registration, the AMF indicates the Allowed NSSAI to the PCF responsible for the access and mobility management. The PCF, in one embodiment, based on the request from the AMF containing Allowed NSSAI and subscription data creates the RFSP (RAT/Frequency Selection Priority) and sends the RFSP to the AMF. The AMF sends the RFSP to the RAN, so that the RAN can configure the UE with appropriate frequencies for Idle mode mobility.

It is assumed that the AMF is aware that at least one of the network slices included in the Allowed NSSAI operates in a specific frequency band. This frequency band may not be homogenously deployed in the network and/or the UE may be configured to prioritize frequency for camping different from the frequency band for the allowed network slice.

Furthermore, in one embodiment, consider the case of two slices identified by NSSAI#1 and NSSAI#2 operating only on frequency carrier 1 and frequency carrier 2 respectively. If the UE first registers only on F1, the UE should include both S-NSSAI#1 and S-NSSAI#2 in the Requested NSSAI. Then the AMF evaluates whether the RAN supports both S-NSSAI#1 and S-NSSAI#2 in the TA and the AMF creates the Allowed NSSAI. If the UE has included S-NSSAI#1 only in the Requested NSSAI and uses S-NSSAI#1, and the UE wants to use S-NSSAI#2, then, in one embodiment, the UE needs to perform another Registration procedure to include S-NSSAI#1 and S-NSSAI#2 in the Requested NSSAI. On its part, the gNB, in one embodiment, should indicate to the AMF that it supports both F1 and F2 (e.g., F2 may be supported via CA or DC; the AMF does not care how F2 is supported). Then the AMF can put both S-NSSAI#1 and S-NSSAI#2 in the Allowed NSSAI.

On its part in the 5GC, in response to the registration request, the AMF, in one embodiment, requests the SMF to establish default PDU sessions. In one embodiment, no DRBs in the RAN are established since there is no data to be receive or sent to the UE.

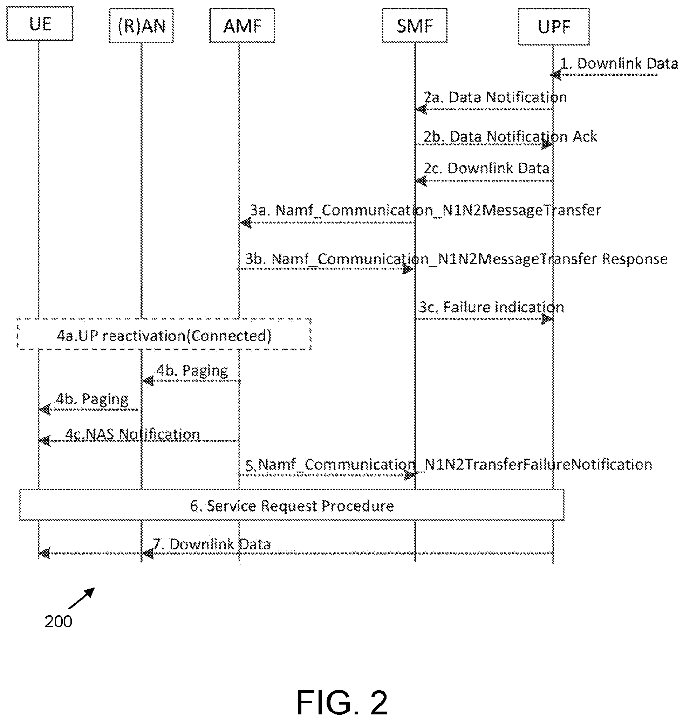

When a packet arrives at the core network (UPF) for a UE (see Figure 2, step 1), in one embodiment, and there is no AN (i.e. N3) tunnel information in the UPF for the PDU session, based on the setting by the SMF, the UPF will either buffer the data or send the data to the SMF or indicate to SMF that DL data arrived. The SMF (see Figure 2, step 3a) in turn identifies, in one embodiment, the appropriate AMF and will request the AMF to send N2 SM message (containing QoS profile and N3 tunnel info) to the RAN. If the UE is in Idle state, in one embodiment, the AMF will trigger Paging procedure. The network, in one embodiment, initiates the service request procedure, e.g., per sub-clause clause 4.2.3.3 Network Triggered Service Request of 3GPP TS 23.502. Specifically, in one embodiment, this requires the AMF to send a Paging message to the UE.

Specifically, in one embodiment, according to the 3GPP standards, when a UPF receives downlink data for a PDU Session and there is no AN Tunnel Info stored in UPF for the PDU Session, based on the instruction from the SMF (e.g., as described in TS 23.501clause 5.8.3), the UPF may buffer the downlink data, or forward the downlink data to the SMF (step 2c).

On arrival of the first downlink data packet for any QoS Flow, in one embodiment, the UPF shall send Data Notification message to the SMF, including N4 Session ID, Information to identify the QoS Flow for the DL data packet, DSCP, if the SMF has not previously notified the UPF to not send the Data Notification to the SMF. The UPF, in one embodiment, forwards the downlink data packets towards the SMF if the SMF instructed the UPF to do so (i.e., the SMF will buffer the data packets).

The SMF, in one embodiment, determines the AMF and invokes the Namf_Communication_N1N2MessageTransfer to the AMF including the PDU Session ID of the PDU Session.

If the UE is in CM-IDLE state at the AMF, in one embodiment, and the AMF is able to page the UE the AMF sends a Namf_Communication_N1N2MessageTransfer response to the SMF immediately to indicate to the SMF that AMF is attempting to reach the UE.

If the UE is in CM-IDLE state, in one embodiment, and the AMF determines that the UE is not reachable for paging, the AMF shall send an Namf_Communication_N1N2MessageTransfer response to the NF from which AMF received the request message to indicate that the UE is not reachable, or the AMF performs asynchronous type communication and stores the UE context based on the received message, it shall send an Namf_Communication_N1N2MessageTransfer response to indicate that asynchronous type communication is invoked.

If the UE, in one embodiment, is in CM-IDLE state in 3GPP access and in CM-CONNECTED state in non-3GPP access, and if the UE is simultaneously registered over 3GPP and non-3GPP accesses in the same PLMN, the network may initiate a Network Triggered Service Request procedure for 3GPP access via non-3GPP access.

If the AMF has determined the UE is reachable, in one embodiment, and the AMF detects the UE is in a Non-Allowed Area unless the request from the SMF is for regulatory prioritized service, the AMF rejects the request from the SMF and notifies the SMF that the UE is reachable only for regulatory prioritized service.

If the UE is in RM-REGISTERED state, in one embodiment, and CM-IDLE and reachable in 3GPP access, the AMF sends a Paging message (NAS ID for paging, Registration Area list, Paging DRX length, Paging Priority, access associated to the PDU Session, Enhanced Coverage Restricted information, WUS Assistance Information) to (R)AN node(s) belonging to the Registration Area(s) in which the UE is registered, then the NG-RAN node pages the UE, including the access associated to the PDU Session in the paging message if received from the AMF (e.g., see TS 38.331).

If the UE is in CM-IDLE state in 3GPP access, in one embodiment, upon reception of paging request for a PDU Session associated to 3GPP access, the UE shall initiate the UE Triggered Service Request procedure.

The UE in CM IDLE state, in one embodiment, initiates the Service Request procedure in order to send uplink signaling messages, user data, to request emergency services fallback, or as a response to a network paging request.

The scenario envisioned herein is a UE that supports multiple configurations such as frequency bands, security domains etc. The network deployment is not uniform, such that all slices may not be available everywhere there is network coverage. Slice availability is dependent on operator configuration and UE subscription in addition to UE support of features such as radio capability, security, etc.

According to the solution described in this document, in one embodiment, the network-triggered Service Request procedure, as shown in Figure 2, is initiated when data arrives at the UPF (see Figure 2, step 1) (e.g., there is no N3 tunnel available) and notifies the SMF, the SMF identifies the appropriate AMF e.g., according to 3GPP TS 23.501 and TS 23.502.

In this document, the term "UP connection of a PDU Session" is used with the same meaning as UP resources; and it includes DRB over the radio interface (i.e., Uu interface) and N3 tunnel over the N3 interface. Accordingly, the term "UP connection activation" means the procedure for activating the DRB and N3 tunnel, e.g., a request message sent from SMF to RAN to activate the UP connection.

Regarding paging the UE by the AMF with inclusion of conditions for User Plane activation for the PDU session having MT data, in one embodiment, the AMF determines (e.g., based on network configuration) that the request from SMF (see Figure 2, steps 3a, 3b) is for PDU Session belonging to an S-NSSAI, which is operating on a particular frequency (e.g., F2). It is also possible that the AMF is transparent to the particular frequency that the slice needs to be configured on.

In one embodiment, the AMF provides, in addition within the Paging message to the UE (see Figure 2, step 4b), a "SliceCheckInfo" parameter, which is determined based on the S-NSSAI identified by the PDU Session ID. The "SliceCheckInfo" parameter (e.g., which is a part of the Paging Extension and included in the Paging message) may include conditions (e.g., the availability of frequency F2 coverage, other related conditions) which the UE needs to check for on receiving the Paging message. The AMF, in one embodiment, may always include "SliceCheckInfo" when it needs to Page a UE based on the UE having indicated that it supports the Paging Extension.

Alternatively, in one embodiment, the AMF may include the "SliceCheckInfo" based on the PDU session to be set up or the slice to be configured at the UE, and the UE's prior indication of its ability to support the Paging Extension including Conditions to check for PDU session establishment. In this disclosure, the paging message received by the UE can be either the CN initiated paging message, or the RAN initiated paging message.

Regarding UE actions on receiving a paging message, in one embodiment, after receiving the paging message with conditions, the UE first checks if the conditions, included within "SliceCheckInfo" in the paging message, for PDU session establishment, have been met. The UE, in one embodiment, responds to the paging message and additionally includes information as to whether or not the conditions indicated in "SliceCheckInfo" are met by initiating the service request (see Figure 2, step 6). If the UE has found the conditions to have not been met, in one embodiment, then it shall respond to the page by indicating "ConditionNotMet." The AMF, in one embodiment, should indicate to the SMF that the UE is temporarily 'unable to support' or unavailable for the PDU session for which data arrived. If the UE finds that the conditions have not been met it may, in one embodiment, based on the conditions, keep scanning in the background for the conditions so as to be able to then indicate to the AMF when the conditions are met.

On receiving "SliceCheckInfo" in the paging message, in one embodiment, the NAS layer can request the AS layer to perform measurements according to the "SliceCheckInfo." The AS layer replies to the NAS layer with the results of measurements.

If the conditions cannot be met, in one embodiment, the UE shall respond to the page and indicate in the response sent to the AMF. For example, it may include an indication, "ConditionNotMet" in the NAS Service Request message sent to the AMF. Furthermore, the UE may also include "SliceConditionAssistanceRequest" in the AS part of the response message. The AS part of the response message, in one embodiment, is terminated in the AN. In response to receiving such a request from the UE by inclusion of "SliceConditionAssistanceRequest," the AN may provide assistance information to allow the UE to efficiently check for the slice conditions to be met. The UE, in one embodiment, then uses this assistance information to conduct a background scan and check for the conditions to be met. Assistance information to the UE may be, for example, that F2 is available within a certain RAN Area which is a part of the current tracking area, or that CAG ID is not available with a certain RAN Area or a mapping of the frequency to RAN Areas within the current TA. This may allow the UE to be efficient when turning on a background scan to check the conditions included in the paging message.

According to this disclosure, in one embodiment, it might be also beneficial for the NAS layer to indicate to the device user interface, that resources for a service are temporarily not available. The user may not be aware about slicing, as slicing is a network feature, therefore, it might be sufficient for the user to be informed about the availability or temporary lack thereof of the service associated with the slice.

Regarding AMF actions on receiving a response from the UE, in one embodiment, if the UE responds to the paging message and indicates that it can meet the conditions for the PDU session establishment, the AMF will determine the PDU Session(s) for which the UP connection(s) shall be activated and send an Nsmf_PDUSession_UpdateSMContext Request to SMF(s) associated with the PDU Session(s) with Operation Type set to "UP activate" to indicate establishment of User Plane resources for the PDU Session(s).

If the UE responds negatively, in one embodiment, the AMF will inform the SMF that the UE is unable to meet the conditions to activate the resources for the PDU session or network slice, with which the PDU Session is associated. The SMF, in one embodiment, will either continue to buffer the data or ask the UPF to continue to buffer the data depending on operator policy, or a timer value. Furthermore, the AMF, in one embodiment, will continue to treat the UE as "in service" and not as unreachable since it did respond to the paging message even if it indicated that the conditions could not be met.

### Network Embodiments

In a first embodiment, the AMF on being notified by the SMF of the need for a PDU session transmits a page to the UE including a paging extension, the paging extension including additional information on conditions that need to be met for the PDU session to be established within the paging message. In one implementation, the conditions to be included are indicated by "SliceCheckInfo." The operator may have a policy that the UP connection of a PDU session associated with a network slice may be established only when the network slice configuration supported at the UE meets various conditions such as operating radio frequency, TA, RAN Area, Cell ID, within coverage of identified group of cells, CAG ID, security domain, and/or the like. It may even extend to conditions of the ME, the mobile equipment such as battery level.

In one embodiment, the condition to be met is derived at the AMF based on the type of data session to be activated, e.g., as requested by the SMF. In such an embodiment, the data session activation is requested by the SMF to the AMF prior to the AMF sending a paging message to the UE. In one embodiment, the AMF receives a paging response message that indicates whether the UE device can fulfill the at least one condition to be met and the AMF determines, based on the indication, whether to reply positively or negatively to the SMF, as explained in more detail below, regarding activating the data session.

In one embodiment, either the UPF or the SMF buffers the data for the UE until receiving a response from the AMF in response to the transmitted page message. In one embodiment, the operator policy may dictate that the UP connection can be established only if the UE meets the conditions applicable for the network slice. In another implementation the operator could also configure whether the data is to be buffered at the UPF or the SMF until such time as the UE can support the associated slice. A slice configuration may have many attributes, such as frequency of radio resource for slice, RAN Area associated with slice, etc. A UE can be configured to operate on a slice once it meets the various conditions or attributed associated with the slice. Thus, the conditions could require the UE to check if 1) it supports the QoS level of a particular service running over this slice; or 2) that the UE supports the frequency where the slice is deployed; or 3) that the UE is in the coverage of the frequency where the slice is deployed. It could be possible that when the UE receives the Paging message it needs to check to see the latency associated with a particular server address after moving to a particular frequency.

In one embodiment the AMF, after receiving data for transmission to the UE, transmits a paging message based on the UE being in CMM-IDLE state. The AMF includes a "SliceCheckInfo" parameter in the Paging message in order to trigger the UE to check and respond to the AMF if the UE meets the conditions included in "SliceCheckInfo." In one implementation, the network may require the UE to be in the coverage of a certain frequency, or it may require the UE to be within a RAN Area (some sub area of the tracking area), within a security/trust domain, coverage of a closed access group ("CAG"), and/or the like. The AMF may include this based on various criteria such as an operator configuration such that data for a particular service can only be served on a particular slice. In one implementation, if the slice for which the data has arrived can be served on any available frequency, then the AMF will not include "SliceCheckInfo." In one implementation, if the UE is to be served with the slice on a particular frequency or only when within a RAN Area or a when a combination of conditions holds true then the AMF includes "SliceCheckInfo" parameter in the Paging message and includes the conditions for the UE to check.

If the UE is simultaneously registered over 3GPP and non-3GPP accesses in the same PLMN and if the UE is in CM-IDLE state in 3GPP access and in CM-CONNECTED state in non-3GPP access, the network may initiate a Network Triggered Service Request procedure for 3GPP access via non-3GPP access and include the Paging Message in the N1 notification message along with the Conditions to be met, e.g., including the "SliceCheckInfo" parameter.

In one embodiment, the AMF determines (e.g., based on network configuration) that the request from SMF is for PDU Session associated with an S-NSSAI, which is operating on a particular frequency or requiring certain specific network configurations or conditions. Based on such a determination, in one implementation the AMF will in addition provide "SliceCheckInfo" parameter for the S-NSSAI identified by the PDU Session for the UE to be able to check the validity of the conditions of the S-NSSAI in the current location.

In one embodiment, the AMF receives and processes the UE's Paging Extension capability indicating the UE's ability to process the extension of the paging message with conditions to be checked by the UE for UP connection activation of a PDU session. In one implementation, this capability may be sent as a new 5GMM capability. In another implementation, the AMF applies Paging Extension if a) the UE has signaled the Paging Extension support and b) the AMF is aware that the PDU Session or Network Slice, which initiate the MT request, operates in conditions different from other PDU Sessions or Network Slices currently configured in the UE. In another implementation, the AMF may determine the conditions to be included in the Paging Extension based on the PDU Session or Network Slice triggering the MT request and based on network configuration.

In one embodiment, the AMF based on receiving a Paging response (e.g., in the form of Service Request message from UE) with an indication (i.e., "ConditionMet" parameter) from the UE about being able to meet the conditions included in the Paging message at the current location, determines to proceed with the Service Request procedure by sending to the RAN the UE context and the N2 SM message from the SMF to activate the UP resources/connection for the PDU Session. The RAN node then decides about the actions (e.g., handover, CA, or DC) to be performed in order to serve the UE on the appropriate frequency for the UP connection of the PDU Session, based on the S-NSSAI association with a particular frequency.

In one implementation, on receiving confirmation (i.e., "ConditionMet" parameter) of being able to meet the conditions in the Paging message, the AMF sends the UE context to RAN node and forwards the request message from SMF (e.g., to activate the UP connection of the PDU Session). In one implementation, if the UE is not currently on the right frequency and the frequency condition is to be satisfied according to the UP connection activation request received from the SMF via AMF, the RAN may trigger HO or use DC or use CA as necessary.

In one embodiment, the AMF based on an indication (e.g., "ConditionNotMet" parameter) from the UE about not being able to meet the conditions included in the Paging message at the current location, indicates to the SMF that the UE is temporarily not reachable for the PDU session (or network slice) but can still continue to page the UE, i.e., not set it to an unreachable state in the AMF. Not receiving the paging response (e.g., Service Request message) will trigger the AMF to assume that the UE is no more reachable and set the UE state to be unreachable. In a further embodiment, the AMF on receiving a paging response with indication "ConditionNotMet," the AMF shall not continue with UP connection activation of the PDU session.

In one further embodiment, the AMF indicates to the SMF that the request for UP connection activation of the PDU session is rejected with a new cause value (e.g., failure due to not available radio resources or out-of-slice coverage, etc.). This indication allows the SMF to treat any potential buffered data to be treated distinctly, or to so indicate to the UPF in case the UPF is buffering the data.

In one embodiment, e.g., during Registration procedure, the AMF receives and processes the UE's Paging Extension capability (e.g., included in the Registration Request message) which indicates the UE's ability to process the Paging extension sent within the Paging message, the Paging extension including conditions to be met for the PDU session establishment. In one embodiment, this Paging Extension capability may be sent as a new 5GMM capability by the UE. In one embodiment, the AMF may include the Paging Extension (e.g., "SliceCheckInfo" parameter in the Paging message) if the UE has signaled the Paging Extension support and the AMF is aware that the PDU Session or Network Slice, which initiated the MT request, operates in conditions different from current PDU Session or Network Slice. The AMF may be able to determine the conditions to be included in the Paging Extension based on the PDU Session or Network Slice triggering the MT request and based on network configuration.

In one embodiment, the AMF may include a set of conditions, each of which needs to be verified individually by the UE after processing the Paging message that includes the Paging Extension carrying the conditions to be met for the PDU session. In response to receive such a list of conditions, the UE will indicate whether it has met each of the conditions in the response message. In one embodiment, the response message is the Service Request, transmitted in response to a Paging message received by the UE.

In another embodiment, in response to receiving an indication of whether the UE meets each of the conditions listed individually, the AMF can further instruct the SMF if the PDU session can be set up. In another embodiment, in response to receiving an indication whether the UE is able to meet each of the conditions or an indication of which conditions the UE is able to meet the AMF may forward the PDU session establishment request from the SMF to the RAN node with appropriate settings based on the received response from the UE.

In another embodiment, in response to receiving an indication that the UE meets a subset of the conditions, the AMF can further instruct the SMF to set up the PDU session. In another embodiment, in response to receiving an indication that the UE meets only a subset of the conditions, the AMF can further instruct the SMF to not set up the PDU session. In another embodiment, in response to receiving an indication that the UE meets a certain subset of the conditions, the AMF can further instruct the SMF to set up the PDU session. In another embodiment, based on receiving an indication identifying which of the conditions listed individually or as a subset the UE is able to meet, the AMF can further instruct the SMF to set up the PDU session.

In an alternate embodiment, the network broadcasts in every cell the identity of the slices supported in the cell. In CMM-Idle, the UE then reports to the AMF any change in slice configurations it can support due to mobility or camping on a different cell. Thus, in this embodiment, the UE updates the AMF of any changes to the slices it can support, based on the frequency layer it is camped on, RAN area it has camped on, etc. The AMF thus keeps track of the supported slices at the UE as it moves around the network. The supported slices may be a subset of the allowed slices or if the new identified supportable slice was not included in the allowed list due to restrictions such as CAG ID, Cell ID, etc., this allows the UE to pro-actively update the AMF of its current capability, based on its subscribed slices stored in the USIM. When data arrives at the UPF and the UPF sends a Data Notification message to the SMF, the SMF in turn messages the appropriate AMF which can instantly become aware of ether the particular PDU session can be established by the UE or not. If the PDU session can be established based on the last reported supported slices configuration by the UE, the AMF will page the UE and cause the UE to initiate session establishment, through the Network initiated Service Request procedure.

In a further embodiment, when the UE is in RRC Connected state and the RAN node is requested to establish a PDU session which cannot be successfully completed due to the UE not being able to meet conditions for the PDU session to be established, the RAN node can configure measurements or appropriate scanning actions by the UE so that the UE can implicitly inform the RAN node when it is able to meet the conditions for the PDU session establishment using an RRC Measurement report or a similar message. The RAN mode may use Measurement Configuration for such a purpose or a new message or information element in an already defined message which includes the Conditions to configure the UE to perform such scanning actions.

For example, if a UE has it's allowed NSSAI containing S-NSSAI#1 and S-NSSAI#2, and the RAN node is aware that S-NSSAI#2 operates in frequency band 2 or frequency 2 only, the RAN configures the UE with appropriate measurement thresholds and measurement configurations for frequency band 2. Based on such configurations by the network the UE can inform the RAN node of any positive change in its ability to meet the PDU session conditions. In another embodiment, the RAN node indicates to the AMF/SMF the reason for why it cannot establish the DRBs needed for the PDU session establishment. This allows the SMF/UPF to then process the data for the UE in an appropriate manner as decided by operator policy or other criteria. In one implementation, the SMF or UPF can buffer the data until such time as the DRBs can be successfully established.

In a further embodiment, if the UE indicates to the AMF that it is not able to meet the conditions included in the Paging Message, then the SMF will receive an indication from the AMF that the Namf_Communication_N1N2MessageTransfer message requested from an SMF has been temporarily rejected and a new cause value "SliceConditionNotMet" may be included in the indication from AMF to SMF to inform the SMF of the reason for the temporary rejection. In one further embodiment, the SMF may, based on network policies, indicate to the UPF to apply temporary buffering.

In one further embodiment, if the RAN node indicates to the AMF that the UE is not able to meet the conditions included Request message to set up DRBs with the UE, then the SMF will receive an indication from the AMF that the request from the SMF has been temporarily rejected and a new cause value "SliceConditionNotMet" may be included in the indication from AMF to SMF to inform the SMF of the reason for the temporary rejection. In one further embodiment, the SMF may, based on network policies, indicate to the UPF to apply temporary buffering.

### RAN Node Embodiments

In one embodiment, the network node such as AMF forwards the request from the SMF to the RAN Node with information about the configuration required for the DRB setup, such as frequency, RAN Area, CAG ID, Cell ID, etc. The RAN node, in one embodiment, will attempt to configure the UE appropriately as indicated and if it cannot meet the conditions, it will indicate a failure to do so in the response to the AMF/SMF. In another embodiment, the RAN node configures the UE to check if the conditions (Cell ID, frequency, CAG ID, etc.) included in the DRB setup request can be met using either Measurement Configuration or similar message or information element in an already defined message, and if the UE responds positively, the RAN node configures the UE with the DRB requested for the PDU session. If the UE cannot meet the conditions the RAN Node will indicate the reason for failure to the AMF/SMF.

In one embodiment, the AMF forwards the request to the RAN node, which has the context for the UE at the time data has arrived at the UPF/SMF, along with the conditions for the PDU session to be initiated for the data. The RAN node, in one embodiment, transmits in response, to the UE, a RRC Reconfiguration message including the conditions for the UE to check. If the UE responds positively indicating that the conditions can be met, the RAN node sets up additional data bearers to the UE for the PDU session. If the UE indicates it cannot meet the conditions, it indicates to the AMF that the request cannot be fulfilled at the time. The RAN node can further configure the UE to keep checking for the conditions in the background and report back when the conditions can be met. In one implementation, the RAN node can configure measurements for a second frequency, the second frequency different from a first frequency, the UE is currently on.

The UE makes measurements on the second frequency and when and if the thresholds included in the measurement configuration are met the UE reports again to the RAN Node that it can meet the conditions. In another implementation the UE processes the RRC Reconfiguration message including the conditions and does not respond to it if it cannot meet the conditions. It responds to the message only when the conditions are met. The lack of response from the UE based on either no message being received or the UE not requesting for resources to transmit the response message are implicit indications the RAN node that the UE cannot meet the conditions at that instant. The RAN node may configure the UE with a timer the timer indicating for how long the UE should check for the conditions to be met.

In another embodiment, the RAN node sends a RAN page to the UE if the UE is in RRC INACTIVE. The RAN page can include the conditions for the UE to check. In another embodiment the RAN node can include the conditions in a RRC Reconfiguration message to be sent to eh UE after the UE exits RRC INACTIVE either in response to the RAN Paging message or at alter time. In one embodiment the RAN node may configure the UE with the appropriate reconfiguration in order to allow it to check the conditions. In one further embodiment, the RAN node can configure the UE to check for conditions right away.

In another embodiment, the RAN paging message can indicate to the UE the conditions to be checked and instruct the UE to check for the conditions when it enters RRC CONNECTED. In another embodiment, the UE receives the RAN Paging message with the conditions and stores the conditions to be checked when it enters RRC CONNECTED. In another embodiment, the UE receives the RAN Paging message with the conditions and stores the conditions to be checked when it enters RRC CONNECTED based on some setting. The setting can be an indirect indication of the slice the data is meant for or priority of the data among other possibilities.

### UE Embodiments

In one embodiment, the UE includes in a registration request message, an indication of its support for a Paging Extension, the Paging extension to be received in a paging message from the AMF which includes conditions the UE needs to meet in order to be able to support a slice. If the UE does not indicate the support, then the AMF will not include ConditionsToBeMet when paging the UE. The AMF can choose to not include the ConditionsToBeMet even if the UE supports the procedure.

In one embodiment, the UE includes within the Registration Request message, an indication to the AMF about the UE's support for Paging extensions, the indication being included within at least one of UE MM Core Network Capability, UE paging probability information, or a new information element.

On Receiving the Paging message including "SliceCheckInfo" the UE should check if the conditions indicated in "SliceCheckInfo" can be met. For example, if the "SliceCheckInfo" is included in the Paging message received in the AS layer, the AS layer sends this information to the NAS layer together with the Paging message. The NAS layer can request the AS layer to perform measurements according to the "SliceCheckInfo." The AS layer replies to the NAS layer with the results of measurements, whereas the result can be positive or negative. In a further embodiment, if the conditions can be met (e.g., the measurements result indicated from the AS layer to NAS layer was positive), the UE shall indicate in the paging response (e.g., NAS Service Request message) that the conditions in "SliceCheckInfo" included in the received Paging message can be met. For example, the UE includes the information that the conditions in "SliceCheckInfo" can be met as a new IE within the NAS Service Request message.

In another embodiment, if the conditions cannot be met, the UE shall indicate in the paging response that the conditions in "SliceCheckInfo" included in the received Paging message cannot be met. In a further embodiment, the UE includes in the AS message carrying the response to the paging message, a request to the AN (access node) that it desires assistance regarding the conditions mentioned in the paging message. In one implementation, the UE includes "SliceAssistanceRequest" in the AS part of the response message to seek assistance form the RAN node in setting up the scanning for the conditions to be met. In one implementation for example the UE may request to seek information about frequency availability within the current paging area, current TA, current RAN Area, ability to meet certain RAN capabilities such as MIMO, etc. In another implementation it may seek information about availability of CAG ID, frequency band, etc. based on the conditions received in the "SliceCheckInfo" within the Paging message.

In another embodiment, the UE may indicate that the condition can be met if RAN takes a certain action or if UE changes its configuration autonomously. In one implementation, the AN will need to redirect the UE to another frequency. In another implementation, the UE can change its current configuration and respond to the page on the indicated frequency on the paging message. For example, if the paging message indicates that the UE needs to be on frequency F2 for the PDU session triggering the paging, and the UE is currently on F1 but is able to reselect to F2, then the UE may reselect to F2 and then respond to the page on F2. In another embodiment the UE confirms that the conditions in the Paging message can be met and continues to respond to the network without making any changes to its current configuration such as frequency camped on etc. In such an embodiment, the SMF will request a DRB to be established towards the UE and the AN will provide an indication to the UE to either redirect to the appropriate configuration such that the condition can be met, such as frequency, or handover the UE after connection establishment.

In one embodiment, the "SliceCheckInfo" includes frequency indication. Since the AMF is not knowledgeable about the current frequency the UE is camped on, the UE may already be meeting the condition. In this case it responds to the page using the Service Request procedure. The UE further can optionally indicate that it meets the frequency condition requirement indicated in the paging message.

In one embodiment, the UE may receive a Paging message wherein the AMF may include a set of conditions or alternatively a list of conditions, each of which needs to be verified individually by the UE after processing the Paging message that includes the Paging Extension carrying the conditions to be met for the PDU session. In one embodiment, the AMF may include sets of conditions, the sets included in priority order, each of which needs to be verified individually by the UE after processing the Paging message that includes the Paging Extension carrying the conditions to be met for the PDU session. In one embodiment, the UE may receive a Paging message wherein the AMF may include a set of conditions or alternatively a list of conditions, the list of conditions included in priority order each of which needs to be verified individually by the UE after processing the Paging message that includes the Paging Extension carrying the conditions to be met for the PDU session. In one embodiment, the AMF may include multiple sets of conditions, each of which needs to be verified individually by the UE after processing the Paging message that includes the Paging Extension carrying the conditions to be met for the PDU session.

In one embodiment, the UE, in response to receiving a list of conditions or sets of conditions to be met for a PDU session, scans for these conditions in the background and may respond to the AMF when a subset of conditions have been met. In one embodiment, the UE in response to receiving a list of conditions or sets of conditions to be met for a PDU session, the list or sets listed in priority order, scans for these conditions in the background and may respond to the AMF when a subset of conditions have been met or when conditions above a certain threshold have been met.

In one embodiment, the UE may receive a Paging message wherein the AMF may include a condition to be met by the UE for the PDU session to established with the further requirement that the condition needs to be met before expiry of a certain timer or within a certain time interval or before a certain time instance, following the processing of the Paging message that includes the Paging Extension carrying the conditions to be met for the PDU session. In one embodiment, the UE in response to receiving a list of conditions or sets of conditions to be met for a PDU session, scans for these conditions in the background and may respond to the AMF when a subset of conditions have been met. In one embodiment, the UE in response to receiving a list of conditions or sets of conditions to be met for a PDU session, scans for these conditions in the background and may respond to the AMF when a subset of conditions have been met before the expiry of the included timer.

In another embodiment, the UE shall respond to the page message even if it cannot meet the conditions included in the paging message, and indicate to the AMF that the conditions cannot be met in the current location and at the time of processing the Paging message.

In a further embodiment, the UE, when responding to the page message using the Service Request procedure, includes information to the RAN node asking for Assistance. This can include information regarding available frequencies in the RAN area, tracking area or security domain related information with the current tracking area, RAN area, etc. If the RAN node responds with the necessary information the UE can utilize this to scan for the necessary conditions based on the assistance information. In one implementation, the network can include whether F2 is available in the RAN area or the tracking area. If it indicates that it is available, then the UE can scan for F2. In another embodiment, if the network indicates it is not available, then the UE can request this information in the tracking area update message sent when moving to a new tracking area in order to update this assistance information.

In one embodiment, after receiving the Paging message with the paging extension including conditions to be checked for initiating a PDU session, the UE scans the network in the background for the conditions. This can be a periodic scan or based on additional information and triggers. After it has determined that the conditions included in the Paging Message with paging extension have been met, it shall initiate a service request with a cause "Paging response." This therefore is a delayed second response to a Paging Message, the first response being sent when the Paging message with the conditions was initially received and when the UE responded to the network that the conditions were not met, followed by the second response being sent when the determines that the conditions have been met or alternatively that the conditions have been partially met if so appropriate.

In one embodiment, the UE includes in the Registration Request message or in a Registration Update message, along with the list of requested slices, an indication if it would like the network to provide a Paging extension support for each requested slice.

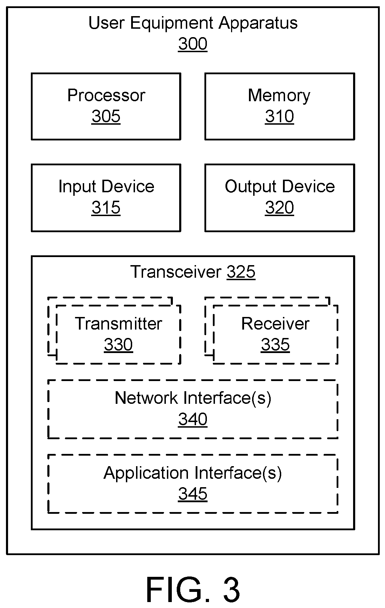

Figure 3 depicts a user equipment apparatus 300 that may be used for paging management, according to embodiments of the disclosure. In various embodiments, the user equipment apparatus 300 is used to implement one or more of the solutions described above. The user equipment apparatus 300 may be one embodiment of the remote unit 105 and/or the UE 205, described above. Furthermore, the user equipment apparatus 300 may include a processor 305, a memory 310, an input device 315, an output device 320, and a transceiver 325.

In some embodiments, the input device 315 and the output device 320 are combined into a single device, such as a touchscreen. In certain embodiments, the user equipment apparatus 300 may not include any input device 315 and/or output device 320. In various embodiments, the user equipment apparatus 300 may include one or more of: the processor 305, the memory 310, and the transceiver 325, and may not include the input device 315 and/or the output device 320.

As depicted, the transceiver 325 includes at least one transmitter 330 and at least one receiver 335. In some embodiments, the transceiver 325 communicates with one or more cells (or wireless coverage areas) supported by one or more base units 121. In various embodiments, the transceiver 325 is operable on unlicensed spectrum. Moreover, the transceiver 325 may include multiple UE panel supporting one or more beams. Additionally, the transceiver 325 may support at least one network interface 340 and/or application interface 345. The application interface(s) 345 may support one or more APIs. The network interface(s) 340 may support 3GPP reference points, such as Uu, N1, PC5, etc. Other network interfaces 340 may be supported, as understood by one of ordinary skill in the art.

The processor 305, in one embodiment, may include any known controller capable of executing computer-readable instructions and/or capable of performing logical operations. For example, the processor 305 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 305 executes instructions stored in the memory 310 to perform the methods and routines described herein. The processor 305 is communicatively coupled to the memory 310, the input device 315, the output device 320, and the transceiver 325. In certain embodiments, the processor 305 may include an application processor (also known as "main processor") which manages application-domain and operating system ("OS") functions and a baseband processor (also known as "baseband radio processor") which manages radio functions.

In various embodiments, the transceiver 325 and the processor 305 control the user equipment apparatus 300 to implement the above described UE behaviors. For example, in one embodiment, the transceiver 325 receives, at a UE device, a paging message from a mobile wireless communication network, the paging message comprising at least one condition to be met by the UE device. In one embodiment, the processor 305 checks that the at least one condition to be met is fulfilled.

In one embodiment, the transceiver 325 sends a paging message response comprising an indication of the check if the at least one condition to be met is fulfilled. In one embodiment, the processor 305 determines, and the transceiver indicates in the paging message response which of the at least one conditions to be met can be fulfilled by the UE device and which of the at least one conditions to be met cannot be fulfilled by the UE device.

In one embodiment, prior to receiving the paging message, the transceiver 325 sends the UE device's capability to support checking whether at least one condition to be met included in the paging message can be fulfilled. In one embodiment, the processor 305 periodically scans conditions on the UE device to determine whether the UE device can fulfill the at least one condition to be met.

In one embodiment, the transceiver 325 includes in the paging message response a request for assistance from the mobile wireless communication network to determine whether the UE device can fulfill the at least one condition to be met. In one embodiment, the transceiver 325 receives assistance information from the mobile wireless communication network in response to the request for assistance.

The memory 310, in one embodiment, is a computer readable storage medium. In some embodiments, the memory 310 includes volatile computer storage media. For example, the memory 310 may include a RAM, including dynamic RAM ("DRAM"), synchronous dynamic RAM ("SDRAM"), and/or static RAM ("SRAM"). In some embodiments, the memory 310 includes non-volatile computer storage media. For example, the memory 310 may include a hard disk drive, a flash memory, or any other suitable non-volatile computer storage device. In some embodiments, the memory 310 includes both volatile and non-volatile computer storage media.

In some embodiments, the memory 310 stores data related to paging management. For example, the memory 310 may store various parameters, panel/beam configurations, resource assignments, policies, and the like, as described above. In certain embodiments, the memory 310 also stores program code and related data, such as an operating system or other controller algorithms operating on the user equipment apparatus 300.

The input device 315, in one embodiment, may include any known computer input device including a touch panel, a button, a keyboard, a stylus, a microphone, or the like. In some embodiments, the input device 315 may be integrated with the output device 320, for example, as a touchscreen or similar touch-sensitive display. In some embodiments, the input device 315 includes a touchscreen such that text may be input using a virtual keyboard displayed on the touchscreen and/or by handwriting on the touchscreen. In some embodiments, the input device 315 includes two or more different devices, such as a keyboard and a touch panel.

The output device 320, in one embodiment, is designed to output visual, audible, and/or haptic signals. In some embodiments, the output device 320 includes an electronically controllable display or display device capable of outputting visual data to a user. For example, the output device 320 may include, but is not limited to, an LCD display, an LED display, an OLED display, a projector, or similar display device capable of outputting images, text, or the like to a user. As another, non-limiting, example, the output device 320 may include a wearable display separate from, but communicatively coupled to, the rest of the user equipment apparatus 300, such as a smart watch, smart glasses, a heads-up display, or the like. Further, the output device 320 may be a component of a smart phone, a personal digital assistant, a television, a table computer, a notebook (laptop) computer, a personal computer, a vehicle dashboard, or the like.

**In** certain embodiments, the output device 320 includes one or more speakers for producing sound. For example, the output device 320 may produce an audible alert or notification (e.g., a beep or chime). **In** some embodiments, the output device 320 includes one or more haptic devices for producing vibrations, motion, or other haptic feedback. In some embodiments, all, or portions of the output device 320 may be integrated with the input device 315. For example, the input device 315 and output device 320 may form a touchscreen or similar touch-sensitive display. In other embodiments, the output device 320 may be located near the input device 315.

The transceiver 325 communicates with one or more network functions of a mobile communication network via one or more access networks. The transceiver 325 operates under the control of the processor 305 to transmit messages, data, and other signals and also to receive messages, data, and other signals. For example, the processor 305 may selectively activate the transceiver 325 (or portions thereof) at particular times in order to send and receive messages.

The transceiver 325 includes at least transmitter 330 and at least one receiver 335. One or more transmitters 330 may be used to provide UL communication signals to a base unit 121, such as the UL transmissions described herein. Similarly, one or more receivers 335 may be used to receive DL communication signals from the base unit 121, as described herein. Although only one transmitter 330 and one receiver 335 are illustrated, the user equipment apparatus 300 may have any suitable number of transmitters 330 and receivers 335. Further, the transmitter(s) 330 and the receiver(s) 335 may be any suitable type of transmitters and receivers. In one embodiment, the transceiver 325 includes a first transmitter/receiver pair used to communicate with a mobile communication network over licensed radio spectrum and a second transmitter/receiver pair used to communicate with a mobile communication network over unlicensed radio spectrum.

**In** certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. **In** some embodiments, the first transmitter/receiver pair and the second transmitter/receiver pair may share one or more hardware components. For example, certain transceivers 325, transmitters 330, and receivers 335 may be implemented as physically separate components that access a shared hardware resource and/or software resource, such as for example, the network interface 340.

**In** various embodiments, one or more transmitters 330 and/or one or more receivers 335 may be implemented and/or integrated into a single hardware component, such as a multi-transceiver chip, a system-on-a-chip, an ASIC, or other type of hardware component. In certain embodiments, one or more transmitters 330 and/or one or more receivers 335 may be implemented and/or integrated into a multi-chip module. In some embodiments, other components such as the network interface 340 or other hardware components/circuits may be integrated with any number of transmitters 330 and/or receivers 335 into a single chip. In such embodiment, the transmitters 330 and receivers 335 may be logically configured as a transceiver 325 that uses one more common control signals or as modular transmitters 330 and receivers 335 implemented in the same hardware chip or in a multi-chip module.

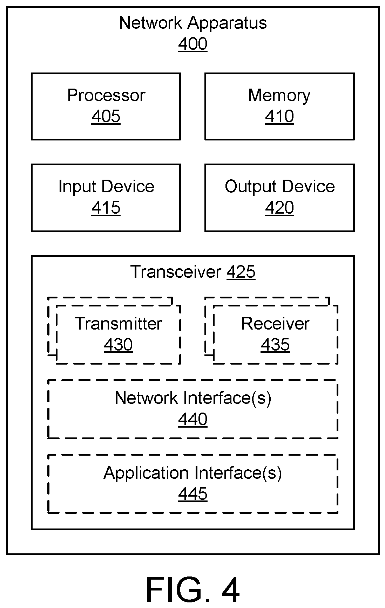

Figure 4 depicts a network apparatus 400 that may be used for paging management, according to embodiments of the disclosure. In one embodiment, network apparatus 400 may be one implementation of a RAN node, such as the base unit 121, the RAN node 210, or gNB, described above. Furthermore, the base network apparatus 400 may include a processor 405, a memory 410, an input device 415, an output device 420, and a transceiver 425.

In some embodiments, the input device 415 and the output device 420 are combined into a single device, such as a touchscreen. In certain embodiments, the network apparatus 400 may not include any input device 415 and/or output device 420. In various embodiments, the network apparatus 400 may include one or more of: the processor 405, the memory 410, and the transceiver 425, and may not include the input device 415 and/or the output device 420.

As depicted, the transceiver 425 includes at least one transmitter 430 and at least one receiver 435. Here, the transceiver 425 communicates with one or more remote units 105. Additionally, the transceiver 425 may support at least one network interface 440 and/or application interface 445. The application interface(s) 445 may support one or more APIs. The network interface(s) 440 may support 3GPP reference points, such as Uu, N1, N2 and N3. Other network interfaces 440 may be supported, as understood by one of ordinary skill in the art.

The processor 405, in one embodiment, may include any known controller capable of executing computer-readable instructions and/or capable of performing logical operations. For example, the processor 405 may be a microcontroller, a microprocessor, a CPU, a GPU, an auxiliary processing unit, a FPGA, or similar programmable controller. In some embodiments, the processor 405 executes instructions stored in the memory 410 to perform the methods and routines described herein. The processor 405 is communicatively coupled to the memory 410, the input device 415, the output device 420, and the transceiver 425. In certain embodiments, the processor 805 may include an application processor (also known as "main processor") which manages application-domain and operating system ("OS") functions and a baseband processor (also known as "baseband radio processor") which manages radio function.

In various embodiments, the network apparatus 400 is a RAN node (e.g., gNB) that includes a transceiver 425 and a processor 405 that sends a paging message from a mobile wireless communication network to a user equipment ("UE") device, the paging message comprising at least one condition to be met by the UE device and receives, in a paging message response, an indication regarding whether the UE device can fulfill the at least one condition to be met.

In one embodiment, the processor 405 determines to activate a data session in response to the indication indicating that the UE device can fulfill the at least one condition to be met. In one embodiment, the transceiver 425 receives, in the paging message response, which of the at least one conditions to be met can be fulfilled by the UE device and which of the at least one conditions to be met cannot be fulfilled by the UE device. In some embodiments, the transceiver 425 receives a request for assistance from the mobile wireless communication network to determine whether the UE device can fulfill the at least one condition to be met.

The memory 410, in one embodiment, is a computer readable storage medium. In some embodiments, the memory 410 includes volatile computer storage media. For example, the memory 410 may include a RAM, including dynamic RAM ("DRAM"), synchronous dynamic RAM ("SDRAM"), and/or static RAM ("SRAM"). In some embodiments, the memory 410 includes non-volatile computer storage media. For example, the memory 410 may include a hard disk drive, a flash memory, or any other suitable non-volatile computer storage device. In some embodiments, the memory 410 includes both volatile and non-volatile computer storage media.

In some embodiments, the memory 410 stores data related to paging management. For example, the memory 410 may store parameters, configurations, resource assignments, policies, and the like, as described above. In certain embodiments, the memory 410 also stores program code and related data, such as an operating system or other controller algorithms operating on the network apparatus 400.

The input device 415, in one embodiment, may include any known computer input device including a touch panel, a button, a keyboard, a stylus, a microphone, or the like. In some embodiments, the input device 415 may be integrated with the output device 420, for example, as a touchscreen or similar touch-sensitive display. In some embodiments, the input device 415 includes a touchscreen such that text may be input using a virtual keyboard displayed on the touchscreen and/or by handwriting on the touchscreen. In some embodiments, the input device 415 includes two or more different devices, such as a keyboard and a touch panel.

The output device 420, in one embodiment, is designed to output visual, audible, and/or haptic signals. In some embodiments, the output device 420 includes an electronically controllable display or display device capable of outputting visual data to a user. For example, the output device 420 may include, but is not limited to, an LCD display, an LED display, an OLED display, a projector, or similar display device capable of outputting images, text, or the like to a user. As another, non-limiting, example, the output device 420 may include a wearable display separate from, but communicatively coupled to, the rest of the network apparatus 400, such as a smart watch, smart glasses, a heads-up display, or the like. Further, the output device 420 may be a component of a smart phone, a personal digital assistant, a television, a table computer, a notebook (laptop) computer, a personal computer, a vehicle dashboard, or the like.

In certain embodiments, the output device 420 includes one or more speakers for producing sound. For example, the output device 420 may produce an audible alert or notification (e.g., a beep or chime). In some embodiments, the output device 420 includes one or more haptic devices for producing vibrations, motion, or other haptic feedback. In some embodiments, all, or portions of the output device 420 may be integrated with the input device 415. For example, the input device 415 and output device 420 may form a touchscreen or similar touch-sensitive display. In other embodiments, the output device 420 may be located near the input device 415.

The transceiver 425 includes at least transmitter 430 and at least one receiver 435. One or more transmitters 430 may be used to communicate with the UE, as described herein. Similarly, one or more receivers 435 may be used to communicate with network functions in the NPN, PLMN and/or RAN, as described herein. Although only one transmitter 430 and one receiver 435 are illustrated, the network apparatus 400 may have any suitable number of transmitters 430 and receivers 435. Further, the transmitter(s) 430 and the receiver(s) 435 may be any suitable type of transmitters and receivers.

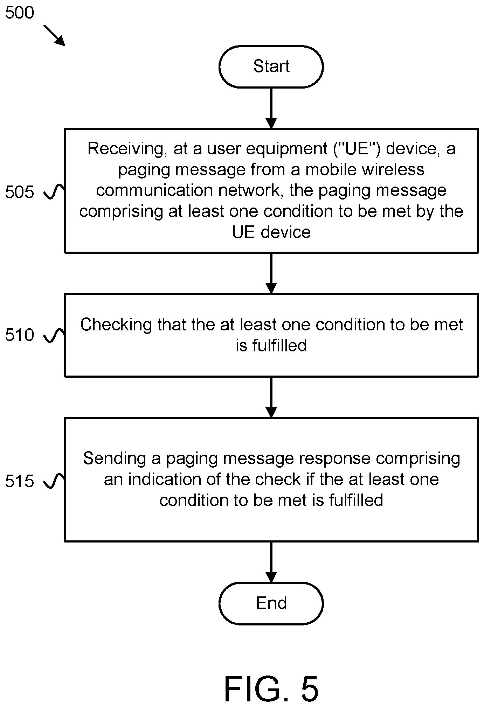

Figure 5 is a flowchart diagram of a method 500 for paging management. The method 500 may be performed by a UE as described herein, for example, the remote unit 105and/or the user equipment apparatus 300. In some embodiments, the method 500 may be performed by a processor executing program code, for example, a microcontroller, a microprocessor, a CPU, a GPU, an auxiliary processing unit, a FPGA, or the like.

The method 500, in one embodiment, includes receiving 505, at a user equipment ("UE") device, a paging message from a mobile wireless communication network, the paging message comprising at least one condition to be met by the UE device. The method 500, in one embodiment, includes checking 510 that the at least one condition to be met is fulfilled. In further embodiments, the method 500 includes sending 515 a paging message response comprising an indication of the check if the at least one condition to be met is fulfilled. The method 500 ends.

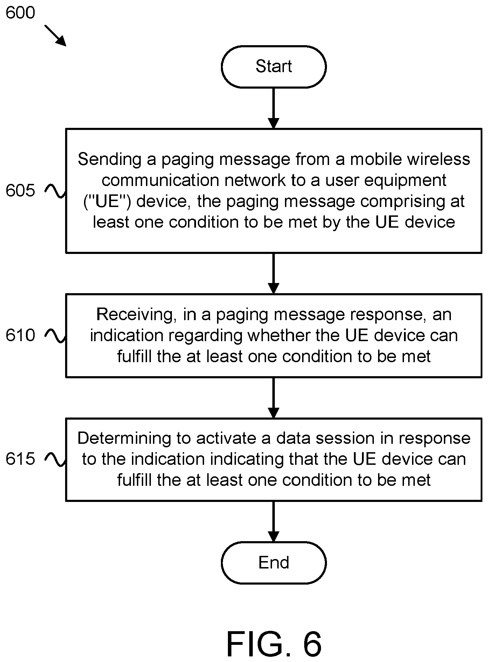

Figure 6 is a flowchart diagram of a method 600 for paging management. The method 600 may be performed by a network device, for example, the network equipment apparatus 400. **In** some embodiments, the method 600 may be performed by a processor executing program code, for example, a microcontroller, a microprocessor, a CPU, a GPU, an auxiliary processing unit, a FPGA, or the like.

The method 600, in one embodiment, includes sending 605 a paging message from a mobile wireless communication network to a user equipment ("UE") device, the paging message comprising at least one condition to be met by the UE device. **In** further embodiments, the method 600 includes receiving 610, in a paging message response, an indication regarding whether the UE device can fulfill the at least one condition to be met. In some embodiments, the method 600 includes determining 615 to activate a data session in response to the indication indicating that the UE device can fulfill the at least one condition to be met. The method 600 ends.

A first apparatus for paging management is disclosed. The first apparatus, in one embodiment, may include a UE as described herein, for example, the remote unit 105 and/or the user equipment apparatus 300. In some embodiments, the first apparatus may include a processor executing program code, for example, a microcontroller, a microprocessor, a CPU, a GPU, an auxiliary processing unit, a FPGA, or the like.

**In** one embodiment, the first apparatus includes a transceiver that receives, at a user equipment ("UE") device, a paging message from a mobile wireless communication network, the paging message comprising at least one condition to be met by the UE device. In one embodiment, the first apparatus includes a processor that checks that the at least one condition to be met is fulfilled.

**In** one embodiment, the transceiver sends a paging message response comprising an indication of the check if the at least one condition to be met is fulfilled. In one embodiment, the processor determines, and the transceiver indicates in the paging message response, at least one of which of the at least one conditions to be met can be fulfilled by the UE device and which of the at least one conditions to be met cannot be fulfilled by the UE device.

**In** one embodiment, prior to receiving the paging message, the transceiver sends the UE device's capability to support checking whether at least one condition to be met included in the paging message can be fulfilled. **In** one embodiment, the processor periodically scans conditions on the UE device to determine whether the UE device can fulfill the at least one condition to be met.

**In** one embodiment, the transceiver includes in the paging message response a request for assistance from the mobile wireless communication network to determine whether the UE device can fulfill the at least one condition to be met. **In** one embodiment, the transceiver receives assistance information from the mobile wireless communication network in response to the request for assistance.

**In** one embodiment, the assistance information comprises information about a frequency availability within a paging area, a radio access network ("RAN") area, a timing advance ("TA"), a closed access group ("CAG"), and RAN capabilities of the UE device. In one embodiment, the at least one condition to be met comprises at least one of a frequency availability within a paging area, a radio access network ("RAN") area, a timing advance ("TA"), a closed access group ("CAG"), and a security domain.

A first method for paging management is disclosed. In one embodiment, the first method may be performed by a UE as described herein, for example, the remote unit 105 and/or the user equipment apparatus 300. **In** some embodiments, the method may be performed by a processor executing program code, for example, a microcontroller, a microprocessor, a CPU, a GPU, an auxiliary processing unit, a FPGA, or the like.

**In** one embodiment, the first method includes receiving, at a user equipment ("UE") device, a paging message from a mobile wireless communication network, the paging message comprising at least one condition to be met by the UE device. **In** one embodiment, the first method includes checking that the at least one condition to be met is fulfilled.

**In** one embodiment, the first method includes sending a paging message response comprising an indication of the check if the at least one condition to be met is fulfilled.

**In** one embodiment, the first method includes determining, and indicating in the paging message response, at least one of which of the at least one conditions to be met can be fulfilled by the UE device and which of the at least one conditions to be met cannot be fulfilled by the UE device. In one embodiment, prior to receiving the paging message, the first method includes sending the UE device's capability to support checking whether at least one condition to be met included in the paging message can be fulfilled.

**In** one embodiment, the first method includes periodically scanning conditions on the UE device to determine whether the UE device can fulfill the at least one condition to be met. In one embodiment, the paging message response includes a request for assistance from the mobile wireless communication network to determine whether the UE device can fulfill the at least one condition to be met.

**In** one embodiment, the first method includes receiving assistance information from the mobile wireless communication network in response to the request for assistance. **In** one embodiment, the assistance information comprises information about a frequency availability within a paging area, a radio access network ("RAN") area, a timing advance ("TA"), a closed access group ("CAG"), and RAN capabilities of the UE device.

**In** one embodiment, the at least one condition to be met comprises at least one of a frequency availability within a paging area, a radio access network ("RAN") area, a timing advance ("TA"), a closed access group ("CAG"), and a security domain.

A second apparatus for paging management is disclosed. The second apparatus, in one embodiment, may include a network device, for example, the network equipment apparatus 400. In some embodiments, the second apparatus includes a processor executing program code, for example, a microcontroller, a microprocessor, a CPU, a GPU, an auxiliary processing unit, a FPGA, or the like.

**In** one embodiment, the second apparatus includes a transceiver that sends a paging message from a mobile wireless communication network to a user equipment ("UE") device, the paging message comprising at least one condition to be met by the UE device and receives, in a paging message response, an indication regarding whether the UE device can fulfill the at least one condition to be met. In one embodiment, the second apparatus includes a processor that determines to activate a data session in response to the indication indicating that the UE device can fulfill the at least one condition to be met.

**In** one embodiment, the transceiver receives, in the paging message response, which of the at least one conditions to be met can be fulfilled by the UE device and which of the at least one conditions to be met cannot be fulfilled by the UE device. **In** some embodiments, the transceiver receives a request for assistance from the mobile wireless communication network to determine whether the UE device can fulfill the at least one condition to be met.

**In** one embodiment, the assistance information comprises information about a frequency availability within a paging area, a radio access network ("RAN") area, a timing advance ("TA"), a closed access group ("CAG"), and RAN capabilities of the UE device. In one embodiment, the at least one condition to be met is sent in the paging message to the UE device in response to receiving an indication from the UE device that the UE device supports checking whether at least one condition to be met can be fulfilled.

**In** one embodiment, the at least one condition to be met comprises at least one of a frequency availability, corresponding to the data session, within a paging area, a radio access network ("RAN") area, a timing advance ("TA"), a closed access group ("CAG"), and a security domain.

A second method for paging management is disclosed. The second method, in one embodiment, may be performed by a network device, for example, the network equipment apparatus 400. In some embodiments, the second method is performed by a processor executing program code, for example, a microcontroller, a microprocessor, a CPU, a GPU, an auxiliary processing unit, a FPGA, or the like.

In one embodiment, the second method includes sending a paging message from a mobile wireless communication network to a user equipment ("UE") device, the paging message comprising at least one condition to be met by the UE device. In one embodiment, the second method includes receiving, in a paging message response, an indication regarding whether the UE device can fulfill the at least one condition to be met. In one embodiment, the second method includes initiating a service request in response to the indication indicating that the UE device can fulfill the at least one condition to be met.

In one embodiment, the second method includes receiving, in the paging message response, which of the at least one conditions to be met can be fulfilled by the UE device and which of the at least one conditions to be met cannot be fulfilled by the UE device. In one embodiment, the second method includes receiving a request for assistance from the mobile wireless communication network to determine whether the UE device can fulfill the at least one condition to be met.

In one embodiment, the assistance information comprises information about a frequency availability within a paging area, a radio access network ("RAN") area, a timing advance ("TA"), a closed access group ("CAG"), and RAN capabilities of the UE device. In one embodiment, the at least one condition to be met is sent in the paging message to the UE device in response to receiving an indication from the UE device that the UE device supports checking whether at least one condition to be met can be fulfilled.

In one embodiment, the at least one condition to be met comprises at least one of a frequency availability, corresponding to the data session, within a paging area, a radio access network ("RAN") area, a timing advance ("TA"), a closed access group ("CAG"), and a security domain.

Embodiments may be practiced in other specific forms. The described embodiments are to be considered in all respects only as illustrative and not restrictive. The scope of the invention is indicated by the appended claims.

## Claims

1. A user equipment, UE, (300) comprising:
a transceiver (325) arranged to receive a paging message from a mobile wireless communication network, the paging message comprising at least one condition to be met by the UE (300); and
a processor (305) arranged to check that the at least one condition to be met is fulfilled,
wherein the transceiver (325) is further arranged to send a paging message response comprising an indication of the check if the at least one condition to be met is fulfilled;
the UE **characterized in that**
the processor (305) is further arranged to determine, and the transceiver (325) is further arranged to indicate in the paging message response, at least one of which of the at least one conditions to be met can be fulfilled by the UE and which of the at least one conditions to be met cannot be fulfilled by the UE.

2. The UE (300) of claim 1, wherein, prior to receiving the paging message, the transceiver (325) is further arranged to send the UE's capability to support checking whether at least one condition to be met included in the paging message can be fulfilled.

3. The UE (300) of claim 1, wherein the processor (305) is further arranged to periodically scan conditions on the UE to determine whether the UE can fulfil the at least one condition to be met.

4. The UE (300) of claim 1, wherein the transceiver (325) is further arranged to include in the paging message response a request for assistance from the mobile wireless communication network to determine whether the UE can fulfil the at least one condition to be met.

5. The UE (300) of claim 4, wherein the transceiver (325) is further arranged to receive assistance information from the mobile wireless communication network in response to the request for assistance.

6. The UE (300) of claim 5, wherein the assistance information comprises information about a frequency availability within a paging area, a radio access network, RAN, area, a timing advance, TA, a closed access group, CAG, and RAN capabilities of the UE.

7. The UE (300) of claim 1, wherein the at least one condition to be met comprises at least one of a frequency availability within a paging area, a radio access network, RAN, area, a timing advance, TA, a closed access group, CAG, and a security domain.

8. A network apparatus (400) comprising:
a transceiver (425) arranged to:
send a paging message from a mobile wireless communication network to a user equipment, UE, the paging message comprising at least one condition to be met by the UE; and
receive, in a paging message response, an indication regarding whether the UE can fulfil the at least one condition to be met; and
a processor (405) arranged to determine to activate a data session in response to the indication indicating that the UE can fulfil the at least one condition to be met;
the network apparatus **characterized in that**
the transceiver (425) is further arranged to receive, in the paging message response, which of the at least one conditions to be met can be fulfilled by the UE and which of the at least one conditions to be met cannot be fulfilled by the UE.

9. The network apparatus (400) of claim 8, wherein the transceiver (425) is further arranged to receive a request for assistance from the mobile wireless communication network to determine whether the UE can fulfil the at least one condition to be met.

10. The network apparatus (400) of claim 9, wherein the assistance information comprises information about a frequency availability within a paging area, a radio access network, RAN, area, a timing advance, TA, a closed access group, CAG, and RAN capabilities of the UE.

11. The network apparatus (400) of claim 8, wherein the at least one condition to be met is sent in the paging message to the UE in response to receiving an indication from the UE that the UE supports checking whether at least one condition to be met can be fulfilled.

12. The network apparatus (400) of claim 8, wherein the at least one condition to be met comprises at least one of a frequency availability, corresponding to the data session, within a paging area, a radio access network, RAN, area, a timing advance, TA, a closed access group, CAG, and a security domain.

13. A method (500) performed by a user equipment, UE, the method (500) comprising:
receiving (505) a paging message from a mobile wireless communication network, the paging message comprising at least one condition to be met by the UE;
checking (510) that the at least one condition to be met is fulfilled;
sending (515) a paging message response comprising an indication of the check if the at least one condition to be met is fulfilled;
the method **characterized in** further comprising:
determining and indicating in the paging message response, at least one of which of the at least one conditions to be met can be fulfilled by the UE and which of the at least one conditions to be met cannot be fulfilled by the UE.

## Patentansprüche

1. Benutzergerät, UE, (300) umfassend:
einen Transceiver (325), der so eingerichtet ist, dass er eine Paging-Nachricht von einem mobilen Funkkommunikationsnetz empfängt, wobei die Paging-Nachricht mindestens eine Bedingung umfasst, die von dem UE (300) erfüllt werden muss; und
einen Prozessor (305), der so eingerichtet ist, dass er überprüft, ob die mindestens eine zu erfüllende Bedingung erfüllt ist,
wobei der Transceiver (325) ferner so eingerichtet ist, dass er eine Paging-Nachrichtenantwort sendet, die eine Angabe der Überprüfung umfasst, ob die mindestens eine zu erfüllende Bedingung erfüllt ist;
wobei das UE **dadurch gekennzeichnet ist, dass** der Prozessor (305) ferner dazu eingerichtet ist, zu bestimmen, und der Transceiver (325) ferner dazu ausgelegt ist, in der Paging-Nachrichtenantwort anzugeben, welche der mindestens einen zu erfüllenden Bedingungen von dem UE erfüllt werden kann und welche der mindestens einen zu erfüllenden Bedingungen von dem UE nicht erfüllt werden kann.

2. UE (300) nach Anspruch 1, wobei der Transceiver (325) vor dem Empfangen der Paging-Nachricht ferner so eingerichtet ist, dass er die Fähigkeit des UE sendet, die Überprüfung zu unterstützen, ob mindestens eine in der Paging-Nachricht eingefügte zu erfüllende Bedingung erfüllt werden kann.

3. UE (300) nach Anspruch 1, wobei der Prozessor (305) ferner so eingerichtet ist, dass er die Bedingungen an dem UE periodisch abtastet, um zu bestimmen, ob das UE die mindestens eine zu erfüllende Bedingung erfüllen kann.

4. UE (300) nach Anspruch 1, wobei der Transceiver (325) ferner so eingerichtet ist, dass er in die Paging-Nachrichtenantwort eine Anfrage um Unterstützung durch das mobile Funkkommunikationsnetz einfügt, um zu bestimmen, ob das UE die mindestens eine zu erfüllende Bedingung erfüllen kann.

5. UE (300) nach Anspruch 4, wobei der Transceiver (325) ferner so eingerichtet ist, dass er als Antwort auf die Unterstützungsanfrage Unterstützungsinformationen von dem mobilen Funkkommunikationsnetz empfängt.

6. UE (300) nach Anspruch 5, wobei die Unterstützungsinformationen Informationen über eine Frequenzverfügbarkeit innerhalb eines Paging-Bereichs, eines Funkzugangsnetzbereichs (RAN), eines Timing-Advance (TA), einer geschlossenen Zugangsgruppe (CAG) und der RAN-Fähigkeiten des UE umfassen.

7. UE (300) nach Anspruch 1, wobei die mindestens eine zu erfüllende Bedingung mindestens eine der folgenden umfasst: eine Frequenzverfügbarkeit innerhalb eines Paging-Bereichs, eines Funkzugangsnetzbereichs (RAN), einen Timing-Advance (TA), eine geschlossene Zugangsgruppe (CAG) und eine Sicherheitsdomäne.

8. Eine Netzwerkvorrichtung (400), umfassend: einen Transceiver (425), der dazu eingerichtet ist:
eine Paging-Nachricht von einem mobilen Funkkommunikationsnetz an ein Benutzergerät (UE) zu senden, wobei die Paging-Nachricht mindestens eine von dem UE zu erfüllende Bedingung umfasst; und eine Angabe in einer Paging-Nachrichtenantwort darüber zu empfangen, ob das UE die mindestens eine zu erfüllende Bedingung erfüllen kann; und einen Prozessor (405), der so eingerichtet ist, dass er als Reaktion auf die Angabe, dass das UE die mindestens eine zu erfüllende Bedingung erfüllen kann, die Aktivierung einer Datensitzung bestimmt;
wobei die Netzwerkvorrichtung **dadurch gekennzeichnet ist, dass** der Transceiver (425) ferner dazu eingerichtet ist, in der Paging-Nachrichtenantwort zu empfangen, welche der mindestens eine zu erfüllenden Bedingungen von dem UE erfüllt werden kann und welche der mindestens eine zu erfüllenden Bedingungen von dem UE nicht erfüllt werden kann.

9. Netzwerkvorrichtung (400) nach Anspruch 8, wobei der Transceiver (425) ferner dazu eingerichtet ist, eine Unterstützungsanfrage von dem mobilen Funkkommunikationsnetzwerk zu empfangen, um zu bestimmen, ob das UE die mindestens eine zu erfüllende Bedingung erfüllen kann.

10. Netzwerkvorrichtung (400) nach Anspruch 9, wobei die Unterstützungsinformationen Informationen über eine Frequenzverfügbarkeit innerhalb eines Paging-Bereichs, eines Funkzugangsnetzbereichs (RAN), eines Timing-Advance (TA), einer geschlossenen Zugangsgruppe (CAG) und der RAN-Fähigkeiten des UE umfassen.

11. Netzwerkvorrichtung (400) nach Anspruch 8, wobei die mindestens eine zu erfüllende Bedingung in der Paging-Nachricht an das UE gesendet wird, als Reaktion auf das Empfangen einer Angabe von dem UE, dass das UE die Überprüfung unterstützt, ob mindestens eine zu erfüllende Bedingung erfüllt werden kann.

12. Netzwerkvorrichtung (400) nach Anspruch 8, wobei die mindestens eine zu erfüllende Bedingung mindestens eine der folgenden umfasst: eine Frequenzverfügbarkeit, die der Datensitzung entspricht, innerhalb eines Paging-Bereichs, eines Funkzugangsnetzbereichs (RAN), einen Timing-Advance (TA), eine geschlossene Zugangsgruppe (CAG) und eine Sicherheitsdomäne.

13. Verfahren (500), das von einem Benutzergerät, UE, durchgeführt wird, das Verfahren (500) umfassend:
Empfangen (505) einer Paging-Nachricht von einem mobilen Funkkommunikationsnetz, wobei die Paging-Nachricht mindestens eine Bedingung umfasst, die von dem UE erfüllt werden muss;
Überprüfen (510), ob die mindestens eine zu erfüllende Bedingung erfüllt ist,
Senden (515) einer Paging-Nachrichtenantwort, die eine Angabe der Überprüfung umfasst, ob die mindestens eine zu erfüllende Bedingung erfüllt ist; wobei das Verfahren **dadurch gekennzeichnet ist, dass** es ferner umfasst:
Bestimmen und Angeben in der Paging-Nachrichtenantwort, welche der mindestens einen zu erfüllenden Bedingungen von dem UE erfüllt werden kann und welche der mindestens einen zu erfüllenden Bedingungen von dem UE nicht erfüllt werden kann.

## Revendications

1. Équipement utilisateur, UE, (300) comprenant :
un émetteur-récepteur (325) agencé pour recevoir un message de radiomessagerie provenant d'un réseau de communication mobile sans fil, le message de radiomessagerie comprenant au moins une condition à remplir par l'UE (300) ; et
un processeur (305) agencé pour vérifier que l'au moins une condition à remplir est satisfaite,
dans lequel l'émetteur-récepteur (325) est en outre agencé pour envoyer une réponse au message de radiomessagerie comprenant une indication de la vérification de si l'au moins une condition à remplir est satisfaite ;
l'UE étant **caractérisé en ce que**
le processeur (305) est en outre agencé pour déterminer, et l'émetteur-récepteur (325) est en outre agencé pour indiquer dans la réponse au message de radiomessagerie, au moins l'une parmi laquelle de l'au moins une condition à remplir peut être satisfaite par l'UE, et laquelle de l'au moins une condition à remplir ne peut pas être satisfaite par l'UE.

2. UE (300) de la revendication 1, dans lequel, avant de recevoir le message de radiomessagerie, l'émetteur-récepteur (325) est en outre agencé pour envoyer la capacité de l'UE à prendre en charge la vérification de si au moins une condition à remplir incluse dans le message de radiomessagerie peut être satisfaite.

3. UE (300) de la revendication 1, dans lequel le processeur (305) est en outre agencé pour analyser périodiquement les conditions sur l'UE afin de déterminer si l'UE est en mesure de satisfaire l'au moins une condition à remplir.

4. UE (300) de la revendication 1, dans lequel l'émetteur-récepteur (325) est en outre agencé pour inclure, dans la réponse au message de radiomessagerie, une demande d'assistance de la part du réseau de communication mobile sans fil afin de déterminer si l'UE est en mesure de satisfaire l'au moins une condition à remplir.

5. UE (300) de la revendication 4, dans lequel l'émetteur-récepteur (325) est en outre agencé pour recevoir des informations d'assistance de la part du réseau de communication mobile sans fil en réponse à la demande d'assistance.

6. UE (300) de la revendication 5, dans lequel les informations d'assistance comprennent des informations concernant la disponibilité d'une fréquence au sein d'une zone de radiomessagerie, une zone de réseau d'accès radio, RAN, une avance de temporisation, TA, un groupe d'accès fermé, CAG, et les capacités RAN de l'UE.

7. UE (300) de la revendication 1, dans lequel l'au moins une condition à remplir comprend au moins l'un(e) parmi la disponibilité d'une fréquence au sein d'une zone de radiomessagerie, une zone de réseau d'accès radio, RAN, une avance de temporisation, TA, un groupe d'accès fermé, CAG, et un domaine de sécurité.

8. Appareil de réseau (400), comprenant :
un émetteur-récepteur (425) agencé pour :
envoyer un message de radiomessagerie depuis un réseau de communication mobile sans fil vers un équipement utilisateur, UE, le message de radiomessagerie comprenant au moins une condition à remplir par l'UE ; et
recevoir, dans une réponse au message de radiomessagerie, une indication précisant si l'UE est en mesure de satisfaire l'au moins une condition à remplir ; et
un processeur (405) agencé pour déterminer s'il convient d'activer une session de données en réponse à l'indication précisant que l'UE est en mesure de satisfaire l'au moins une condition à remplir ;
l'appareil de réseau étant **caractérisé en ce que**
l'émetteur-récepteur (425) est en outre agencé pour recevoir, dans la réponse au message de radiomessagerie, l'indication de laquelle de l'au moins une condition à remplir peut être satisfaite par l'UE, et laquelle de l'au moins une condition à remplir ne peut pas être satisfaite par l'UE.

9. Appareil de réseau (400) de la revendication 8, dans lequel l'émetteur-récepteur (425) est en outre agencé pour recevoir une demande d'assistance de la part du réseau de communication mobile sans fil afin de déterminer si l'UE est en mesure de satisfaire l'au moins une condition à remplir.

10. Appareil de réseau (400) de la revendication 9, dans lequel les informations d'assistance comprennent des informations concernant la disponibilité d'une fréquence au sein d'une zone de radiomessagerie, une zone de réseau d'accès radio, RAN, une avance de temporisation, TA, un groupe d'accès fermé, CAG, et les capacités RAN de l'UE.

11. Appareil de réseau (400) de la revendication 8, dans lequel l'au moins une condition à remplir est envoyée dans le message de radiomessagerie, à l'UE, en réponse à la réception d'une indication provenant de l'UE précisant que l'UE prend en charge la vérification de si au moins une condition à remplir peut être satisfaite.

12. Appareil de réseau (400) de la revendication 8, dans lequel l'au moins une condition à remplir comprend au moins l'un(e) parmi la disponibilité d'une fréquence, correspondant à la session de données, au sein d'une zone de radiomessagerie, une zone de réseau d'accès radio, RAN, une avance de temporisation, TA, un groupe d'accès fermé, CAG, et un domaine de sécurité.

13. Procédé (500) mis en œuvre par un équipement utilisateur, UE, le procédé (500) comprenant :
la réception (505) d'un message de radiomessagerie provenant d'un réseau de communication mobile sans fil, le message de radiomessagerie comprenant au moins une condition à remplir par l'UE ;
la vérification (510) que l'au moins une condition à remplir est satisfaite ;
l'envoi (515) d'une réponse au message de radiomessagerie comprenant une indication de la vérification de si l'au moins une condition à remplir est satisfaite ;
le procédé étant **caractérisé en ce qu'**il comprend en outre :
la détermination, et l'indication, dans la réponse au message de radiomessagerie, d'au moins l'une parmi laquelle de l'au moins une condition à remplir peut être satisfaite par l'UE, et laquelle de l'au moins une condition à remplir ne peut pas être satisfaite par l'UE.
